# EUROPÄISCHE PATENTSCHRIFT

(11) **EP 3 434 830 B1**
(45) Veröffentlichungstag und Bekanntmachung des Hinweises auf die Patenterteilung: **25.01.2023**
(21) Anmeldenummer: 18184427.5
(22) Anmeldetag: 19.07.2018
(51) Int. Cl.: G05G 9/04, G06F 3/01, E02F 9/20, G08C 17/00, G05G 9/047

(54) **BEDIENEINRICHTUNG FÜR EINE ARBEITSMASCHINE**
OPERATING DEVICE FOR A WORKING MACHINE
DISPOSITIF DE FONCTIONNEMENT POUR UNE MACHINE DE TRAVAIL

(30) Priorität: 25.07.2017 DE 102017116830
(43) Veröffentlichungstag der Anmeldung: 30.01.2019
(73) Patentinhaber: Liebherr-Hydraulikbagger GmbH, 88457 Kirchdorf (DE)
(72) Erfinder: Bolz, Gerhard, 88457 Kirchdorf an der Iller (DE); Mang, Florian, 87700 Memmingen (DE); Ansorge, Dieter, 88430 Rot an der Rot (DE)
(74) Vertreter: Laufhütte, Dieter

(56) Entgegenhaltungen:
- DE-A1- 10 043 179
- JP-A- 2005 212 957
- JP-A- 2006 028 953
- KR-B1- 101 369 840
- US-A1- 2006 248 478
- US-A1- 2014 216 192
- US-B1- 7 862 522

## Beschreibung

Die Erfindung betrifft eine Bedieneinrichtung für eine Arbeitsmaschine mit wenigstens einem Ausleger, wobei die Bedieneinrichtung dazu ausgebildet ist, Steuersignale zum Ansteuern der Arbeitsmaschine in Abhängigkeit von wenigstens einer Gelenkstellung einer Hand einer Bedienperson zu erzeugen und wobei die Bedieneinrichtung wenigstens eine Bedieneinheit umfasst.

Bei Baumaschinen bzw. Arbeitsmaschinen, wie beispielsweise Hydraulikbaggern ist es gemäß dem Stand der Technik bekannt, diese von einem daran vorgesehenen Fahrerstand aus zu bedienen. Die konventionelle Bedienung einer Arbeitsausrüstung der Arbeitsmaschine erfolgt üblicherweise über Handsteuergeräte, die durch hydraulische und/oder elektrische Signale Steuerventile betätigen um einen Ölstrom zu Hydraulikzylindern zu steuern. Entsprechendes gilt auch für Drehbewegungen eines Oberwagens der Arbeitsmaschine. Die Handsteuergeräte können in der Regel links und rechts vom Fahrersitz in einer Trägerkonsole innerhalb des Fahrerstands angebracht sein. Im Rahmen der vorliegenden Erfindung wird von Arbeitsmaschinen gesprochen, die im Sinne der Erfindung Baumaschinen umfassen, aber auch weitere Maschinen, wie Umschlagmachinen oder andere beliebige Handlingsmaschinen.

Bei der Steuerung wird entsprechend der durch die Handsteuergeräte zurückgelegten Wege bzw. entsprechend der Auslenkung entsprechender Hebel der Handsteuergeräte eine Ölmenge an entsprechende Hydraulikzylinder der Arbeitsmaschine geleitet.

Die einzelnen Teilbewegungen der Arbeitsausrüstung bzw. der Arbeitsmaschine müssen vom Maschinenbediener durch gezieltes Auslenken der Steuerhebel abgestimmt werden, um eine homogene Arbeitsbewegung des Arbeitswerkzeugs zu erreichen. Die Bedienung der Arbeitsmaschine ist dabei nicht ohne weiteres intuitiv möglich.

Aus dem Stand der Technik sind ferner auch maschinenferne Steuerungen bzw. Fernsteuerungen bekannt, mit denen die Funktion der oben beschriebenen konventionellen Bedienung per Funksignal an die Arbeitsmaschine übertragen und somit auf einer externe Bedieneinheit appliziert bzw. durchgeführt werden kann. Derartige Funkfernsteuerung sind bekannterweise als "Bauchläden" ausgebildet, die sich ein Maschinenbediener umhängen kann und/oder die ein Maschinenbediener zum Bedienen der Maschine vor seinem Körper hält. Eine Vorrichtung gemäß dem Stand der Technik ist in Dokument US 2006/248478 A1 offenbart.

Nachteilig bei der aus dem Stand der Technik bekannten Bedienung ist, dass das komplexe Arbeitsspiel der Arbeitsmaschine bei der Bedienung der Funktionen der Arbeitsmaschine bzw. der Baggerfunktionen über zwei Handsteuergeräte sehr viel Übung vom Maschinenbediener verlangt. Hierdurch ist wiederrum eine relativ lange Anlernzeit des Maschinenbedieners bedingt.

Vor diesem Hintergrund ist es Aufgabe der Erfindung, eine verbesserte Bedieneinrichtung zum Bedienen einer Arbeitsmaschine bereitzustellen. Die erfindungsgemäße Bedieneinrichtung soll es ermöglichen, die sichere Bedienung der Arbeitsmaschine auch ungeübten Maschinenbedienern mit nur kurzen Einarbeitungsphasen zu ermöglichen. Entsprechend kann erfindungsgemäß eine signifikante Verkürzung der Einarbeitungszeit des Maschinenbedieners erreicht werden.

Die Aufgabe wird erfindungsgemäß durch eine Bedieneinrichtung mit den Merkmalen des Anspruchs 1 gelöst. Vorteilhafte Ausgestaltungen sind Gegenstand der Unteransprüche.

Demnach ist eine Bedieneinrichtung für eine Arbeitsmaschine mit wenigstens einem Ausleger vorgesehen, wobei die Bedieneinrichtung dazu ausgebildet ist, Steuersignale zum Ansteuern der Arbeitsmaschine in Abhängigkeit von wenigstens einer Gelenkstellung wenigstens einer Hand einer Bedienperson zu erzeugen, wobei die Bedieneinrichtung wenigstens eine Bedieneinheit umfasst.

Mit der wenigstens einen Gelenkstellung der Hand kann beispielsweise wenigstens eine Winkelstellung eines beliebigen Gelenkes einer menschlichen Hand wie beispielsweise eines Finger- oder des Handgelenkes gemeint sein.

Erfindungsgemäß ist vorgesehen, dass die Bedieneinheit dazu eingerichtet ist, die Stellung des Handgelenks, wenigstens eines Fingergrundgelenks, wenigstens eines Fingermittelgelenks, wenigstens eines Fingerendgelenks, des Daumensattelgelenks, des Daumengrundgelenks und/oder des Daumenendgelenks der wenigstens einen Hand zu erfassen. Mit der Stellung des jeweiligen Gelenks kann dabei insbesondere die Winkelstellung des jeweiligen Gelenks bzw. ein davon abhängiger Parameter gemein sein.

Die Bedieneinheit kann an der Hand der Bedienperson festgestellt werden, wobei insbesondere Schnallen vorgesehen sein können, mittels der die Bedieneinheit an der Hand und/oder am Unterarm der Bedienperson festgestellt werden kann.

Die Bedieneinheit kann beispielsweise über eine kabellose Schnittstelle mit der Arbeitsmaschine zum Übertragen der Steuersignale gekoppelt sein. Damit ist für Einsätze im gefährlichen Umfeld die Bedienung der Arbeitsmaschine auch von einem sicherem Standort und insbesondere beabstandet von der Arbeitsmaschine möglich.

Vorteilhafterweise ermöglicht die Bedieneinheit eine intuitive Bedienung der Arbeitsmaschine durch den Maschinenbediener, wobei insbesondere homogene Arbeitsbewegungen der Ausrüstungen und des Oberwagens der Arbeitsmaschine einfach ausgeführt werden können.

Komplexe Arbeitsbewegungen der Arbeitsmaschine bzw. der Arbeitsausrüstung und des Anbauwerkzeugs der Arbeitsmaschine können durch sinnfällige Bewegungen des Maschinenbedieners mittels der erfindungsgemäßen Bedieneinrichtung gesteuert werden. Die Erfindung ermöglicht somit durch die Verwendung neuartiger Bedienelemente eine intuitive Bedienung der Arbeitsfunktionen beispielsweise eines Hydraulikbaggers oder einer sonstigen Arbeitsmaschine.

Die Bedieneinheit kann ergonomisch so gestaltet sein, dass sie an einer Hand des Maschinenführers bzw. Maschinenbedieners festgestellt werden kann.

Die Erfindung ermöglicht es somit auch, autonome Arbeitsmaschinen zu nutzen bzw. zu steuern, bei denen keine Fahrerarbeitsplätze an den Arbeitsmaschinen vorgesehen sind und die somit für Einsätze in besonders gefährdeten Arbeitsfeldern geeignet sind. Ferner können mittels der erfindungsgemäßen Bedieneinrichtung die Anschaffungs- und Betriebskosten einer Arbeitsmaschine verringert werden.

Die Bedieneinrichtung kann eine externe Arbeitsmaschinen-Fernsteuerung bzw. Bagger-Fernsteuerung sein, bei der die Arbeitsbewegung der Arbeitsausrüstung und eines Anbauwerkzeuges sowie die Drehbewegung des Oberwagens und ggf. die Raupenbewegungen eines Raupenantriebs oder sonstige Antriebsbewegungen der Arbeitsmaschine mittels der Bedieneinrichtung gesteuert werden können. Dies gilt insbesondere für Grabbewegungen der Arbeitsmaschine, die erfindungsgemä-βe intuitiv über Grabbewegungen der menschlichen Hand gesteuert werden können.

In einer besonders bevorzugten Ausführung ist denkbar, dass die Bedieneinrichtung genau zwei Bedieneinheiten umfasst, wobei mittels einer ersten Bedieneinheit wenigstens eine Gelenkstellung der linken Hand und/oder mittels der zweiten Bedieneinheit wenigstens eine Gelenkstellung der rechten Hand der Bedienperson erfassbar ist. Die Bedieneinheit bzw. die Bedieneinheiten können selbstverständlich auch dazu ausgebildet sein, mit einer beliebigen Hand des Maschinenbedieners genutzt zu werden.

Es ist denkbar, dass mit einer Hand der Bedienperson bzw. des Maschinenbedieners Arbeitsbewegungen einer Baggerausrüstung oder einer sonstigen Arbeitsmaschinenausrüstung ausgeführt werden. Die Arbeitsbewegung kann das Verschwenken eines Auslegers und/oder eines Stiels umfassen. Eine der anderen Hand zugeordnete Bedieneinheit kann alternativ oder zusätzlich zur Steuerung der Arbeitsbewegung eines Arbeitswerkzeuges genutzt werden.

Selbstverständlich ist auch eine umgekehrte oder unterschiedliche Zuordnung der Bedieneinheiten denkbar. Die Bedieneinheiten können dabei jeweils zum beidseitigen Betrieb bzw. zur beidseitigen Nutzung durch die linke oder die rechte Hand eines Maschinenbedieners ausgebildet sein.

In einer weiteren bevorzugten Ausführung ist denkbar, dass die Bedieneinrichtung dazu ausgebildet ist, auf Grundlage wenigstens einer der erfassten Stellungen wenigstens ein Steuersignal zum Ansteuern wenigstens eines Aktuators der Arbeitsmaschine zu erzeugen.

In einer besonders bevorzugten Ausführung kann dabei vorgesehen sein, dass der wenigstens eine Aktuator ein erster Aktuator ist, der zum Verschwenken eines ersten Abschnitts des Auslegers der Arbeitsmaschine relativ zu einem Oberwagen der Arbeitsmaschine eingerichtet ist, wobei insbesondere der erste Aktuator in Abhängigkeit von der Stellung des Handgelenks ansteuerbar ist. Der erste Aktuator kann beispielsweise einen Schwenkarm oder den gesamten Ausleger der Arbeitsmaschine relativ zu ihrem Oberwagen verschwenken.

Der Begriff des ersten Aktuators ist vorliegend nicht einschränkend zu verstehen. So kann auch ein einziger bzw. alleiniger Aktuator oder eine Mehrzahl von Aktuatoren als der erste Aktuator der Arbeitsmaschine bezeichnet werden.

In einer weiteren bevorzugten Ausführung ist denkbar, dass der wenigstens eine Aktuator ein zweiter Aktuator ist, der zum Verschwenken eines zweiten Abschnitts des Auslegers der Arbeitsmaschine relativ zur einem anderen Abschnitts des Auslegers eingerichtet ist, wobei insbesondere der zweite Aktuator in Abhängigkeit von der Stellung wenigstens eines Fingergrundgelenks ansteuerbar ist.

Ferner ist eine Ausführung denkbar, in der der wenigstens eine Aktuator ein dritter Aktuator ist, der zum Verschwenken eines dritten Abschnitts des Auslegers der Arbeitsmaschine relativ zum einem anderen Abschnitts des Auslegers eingerichtet ist, wobei insbesondere der dritte Aktuator in Abhängigkeit von der Stellung wenigstens eines Fingermittelgelenks und/oder Fingerendgelenks ansteuerbar ist. Bei den Abschnitten des Auslegers kann es sich um Stiele oder sonstige Komponenten des Auslegers handeln.

In einer weiteren bevorzugten Ausführung ist denkbar, dass der wenigstens eine Aktuator ein vierter Aktuator ist, der zum Verstellen eines Arbeitswerkzeugs und/oder eines Grabwerkzeugs der Arbeitsmaschine eingerichtet ist, wobei insbesondere der vierte Aktuator in Abhängigkeit von der Stellung genau zweier Fingermittelgelenke und/oder Fingerendgelenke ansteuerbar ist.

In einer weiteren bevorzugten Ausführung kann vorgesehen sein, dass der wenigstens eine Aktuator ein fünfter Aktuator ist, der zum Verschwenken eines Arbeitswerkezuges und/oder eines Grabwerkzeuges der Arbeitsmaschine relativ zu einem Abschnitt des Auslegers eingerichtet ist, wobei insbesondere der fünfte Aktuator in Abhängigkeit der Stellung des Handgelenks und/oder wenigstens eines Fingergrundgelenks ansteuerbar ist.

Die einzelnen Aktuatoren können alternativ oder zusätzlich in Abhängigkeit von den Stellungen mehrerer Gelenke ansteuerbar sein. Bei dem Arbeitswerkzeug kann es sich beispielsweise um eine Grabschale oder einen Baggerlöffel handeln.

Bei einer Ausführung der Erfindung mit genau zwei Bedieneinheiten kann vorgesehen sein, dass einer der Bedieneinheiten wenigstens einer der drei dem Ausleger zugeordneten Aktuatoren gemäß den Ansprüchen 4-6 zugeordnet ist, während der anderen Bedieneinheit wenigstens einer der dem Arbeitswerkzeug zugeordneten Aktuatoren gemäß einem der Ansprüche 7-8 zugeordnet ist. Denkbar ist aber auch jede sonstige vom Fachmann als für sinnvoll erachtete Zuordnung der Aktuatoren der Bedieneinheiten.

In einer weiteren bevorzugten Ausführung ist denkbar, dass die wenigstens eine Bedieneinheit ein Display, insbesondere einen Touchscreen umfasst.

Über das Display bzw. den Touchscreen können dem Maschinenbediener Informationen über Betriebszustände der Arbeitsmaschine und/oder Auftragsdaten angezeigt werden. Ferner können zusätzliche Steuerungsfunktionen über den Touchscreen ausgeführt werden.

Der Maschinenbediener kann erfindungsgemäß durch eine rechnergestützte inverse Steuerung entlastet werden. Da Arbeitsmaschinen in einem vernetzten Baustellenumfeld eingesetzt werden können, können mittels der Bedieneinheit und insbesondere mittels des Touchscreens Signale und Informationen bidirektional bzw. polydirektional zwischen der Arbeitsmaschine, der Bedieneinrichtung, dem Umfeld der Arbeitsmaschine und ggf. weiteren Einrichtung übertragen werden.

Die Erfindung ist ferner auch auf eine Arbeitsmaschine, insbesondere einen Hydraulikbagger, mit wenigstens einer Bedieneinrichtung nach einem der Ansprüche 1-9 gerichtet, wobei die Bedieneinrichtung über eine insbesondere kabellose Schnittstelle mit einem Steuergerät der Arbeitsmaschine gekoppelt ist. Bei dem Steuergerät kann es sich um einen Bordcomputer der Arbeitsmaschine bzw. und eine sonstige Regelung/Steuerung der Arbeitsmaschine handeln.

Weitere Einzelheiten und Vorteile der Erfindung sind anhand der in den Figuren beispielhaft gezeigten Ausführung erläutert. Dabei zeigen:
- Figur 1:: Teilansicht eines Maschinenbedieners mit zwei Bedieneinheiten einer erfindungsgemäßen Bedieneinrichtung;
- Figur 2:: Detailansicht zweier Bedieneinheiten;
- Figur 3:: Gegenüberstellung einer Baumaschine und einer Hand eines Maschinenbedieners hinsichtlich einander entsprechender Drehpunkte;
- Figur 4:: Ansichten einer Bedieneinheit;
- Figuren 5, 6:: Beispiele zu Vorrichtungen zur Erfassung der Stellung von Gelenken der Hand;
- Figur 7:: beispielhafte Ausführung einer Bedieneinheit mit Display;
- Figur 8:: beispielhafte Ausgestaltung des Displays;
- Figur 9:: beispielhafte Ausführung einer Bedieneinheit; und
- Figur 10:: Beispiele für die Erzeugung von Steuersignalen mittels der Bedieneinrichtung.

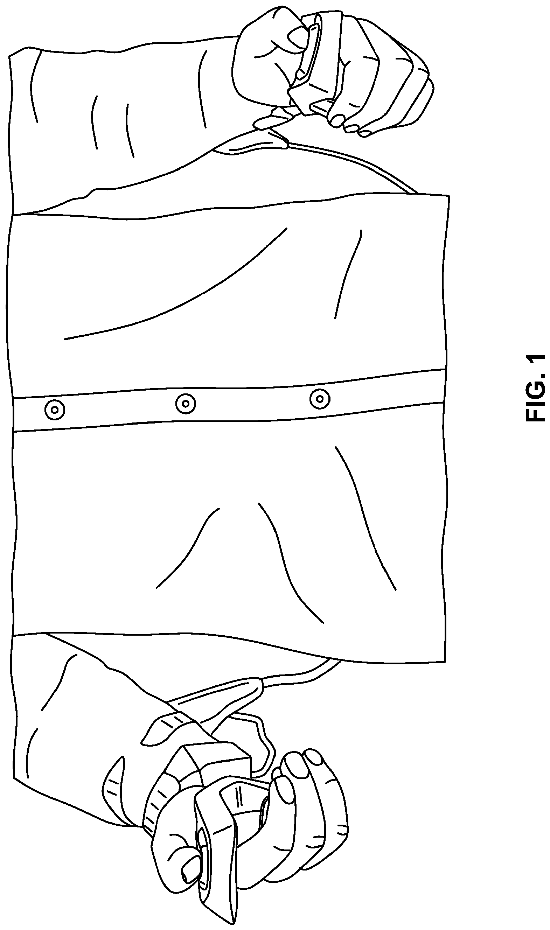

Figur 1 zeigt eine Frontansicht eines Maschinenbedieners mit einer zwei Bedieneinheiten umfassenden Bedieneinrichtung. Mittels der Bedieneinrichtung können Steuersignale zum Ansteuern einer Arbeitsmaschine oser Baumaschine erzeugt werden. Die Steuersignale können dabei von wenigstens einer Gelenkstellung der Hände bzw. der Finger des Maschinenbedieners abhängen. Die der rechten Hand des Maschinenbedieners zugeordnete Bedieneinheit kann beispielsweise die Stellung des Handgelenks und die Stellung der Fingergrundgelenke der rechten Hand des Maschinenbedieners erfassen und diese Stellungen zum Erzeugen von Steuersignalen zum Ansteuern der Baumaschine nutzen. Hierbei kann beispielweise ein Ausleger wie beispielsweise ein Baggerarm entsprechend der Stellung der rechten Hand und/oder ihrer Finger angesteuert werden. Zur Erfassung der Stellung der Hand können mechanische Bewegungen der Bedieneinheit mittels Sensoren wie beispielsweise mittels eines Potentiometers digitalisiert werden und als Ausgangswerte für die Erstellung von Steuersignalen genutzt werden.

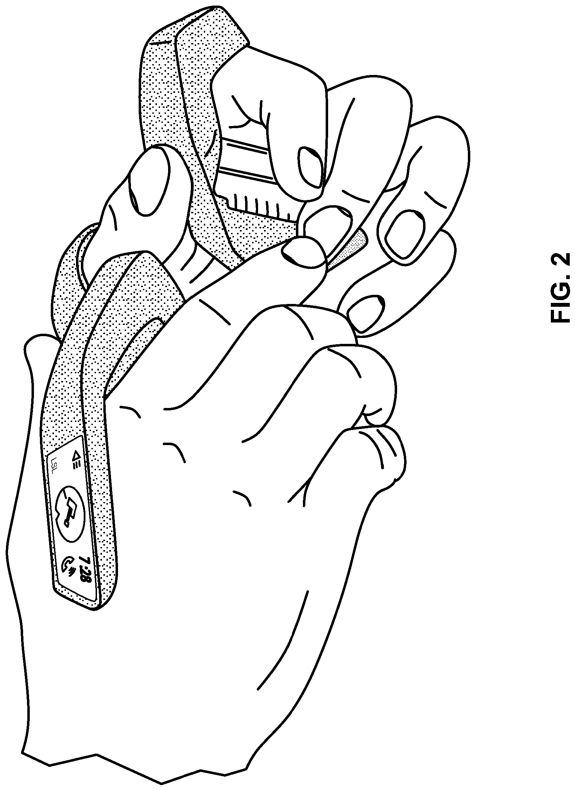

Figur 2 zeigt eine Detailansicht, bei der ein Display auf einer der Bedieneinheiten zu erkennen ist. Das Display kann als Touchscreen ausgebildet sein. Es kann zum Anzeigen von Informationen genutzt werden, die die Baumaschine betreffen können. Ferner kann es zum Steuern von Funktionen der Baumaschine genutzt werden. Das Display kann in einem Abschnitt der Bedieneinheit angeordnet sein, der am Handrücken, insbesondere im Bereich zwischen dem Daumen und dem Zeigefinger der Hand anliegt.

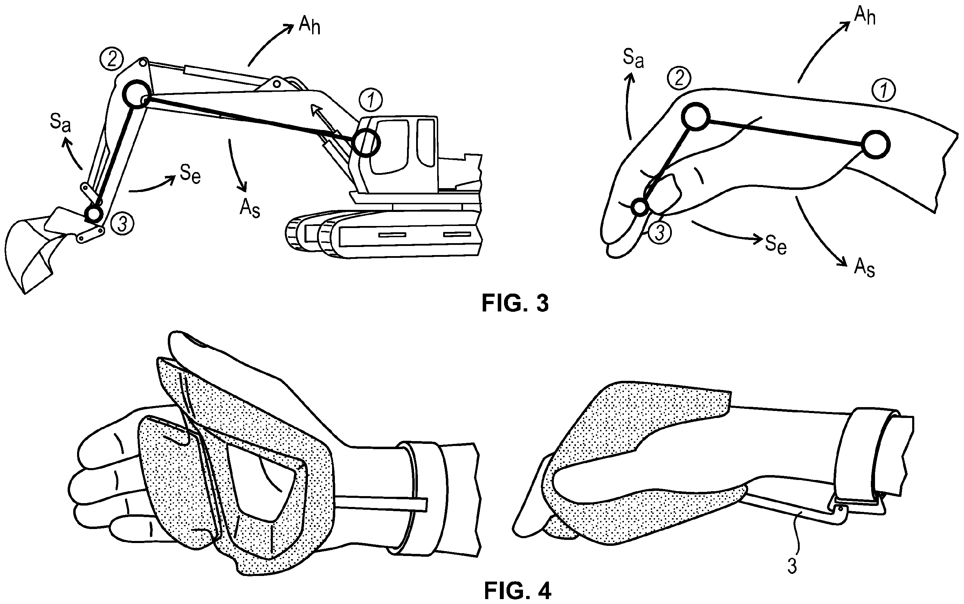

Figur 3 zeigt, dass mit der rechten Hand des Maschinenbedieners beispielsweise der Grabvorgang der Arbeitsausrüstung des Baggers nachgebildet werden kann. Denkbar ist, dass diese Funktion sowie auch alle anderen vorliegend beschriebenen Funktionen mit der jeweils anderen Hand durchgeführt werden. Das Handgelenk entspricht dem Drehpunkt 1 des Auslegers am Oberwagen einer Baumaschine. Das Knöchelgelenk bzw. Fingergrundgelenk entspricht dem Drehpunkt 2 des Stieles oder eines sonstigen Abschnitts des Auslegers.

Wird die Hand nach oben oder unten bewegt, wird diese Bewegung in Steuersignale zum Ansteuern der Baumaschine umgewandelt. Die mittels der Steuersignale bewirkten Bewegungen des Baggerauslegers oder sonstiger Teile der Baumaschine können so ausgewählt werden, dass eine möglichst große Übereinstimmung bzw. Ähnlichkeit zwischen den Bewegungen der Hand und der Baumaschine besteht.

Werden die Finger am Knöchel bewegt, kann die Fingerbewegung beispielsweise der Bewegung des Stiels der Baumaschine entsprechen.

Wie aus der Figur 4 hervorgeht, kann die Bedieneinheit an einer Hand und/oder an einem Unterarm befestigt sein. Die Hand kann zwischen einen Abschnitt mit einem Anzeigedisplay und ein Oberteil gesteckt werden. Die Handbewegung im Handgelenk bzw. die Stellung des Handgelenks kann über eine Schiebestange 3 übertragen werden.

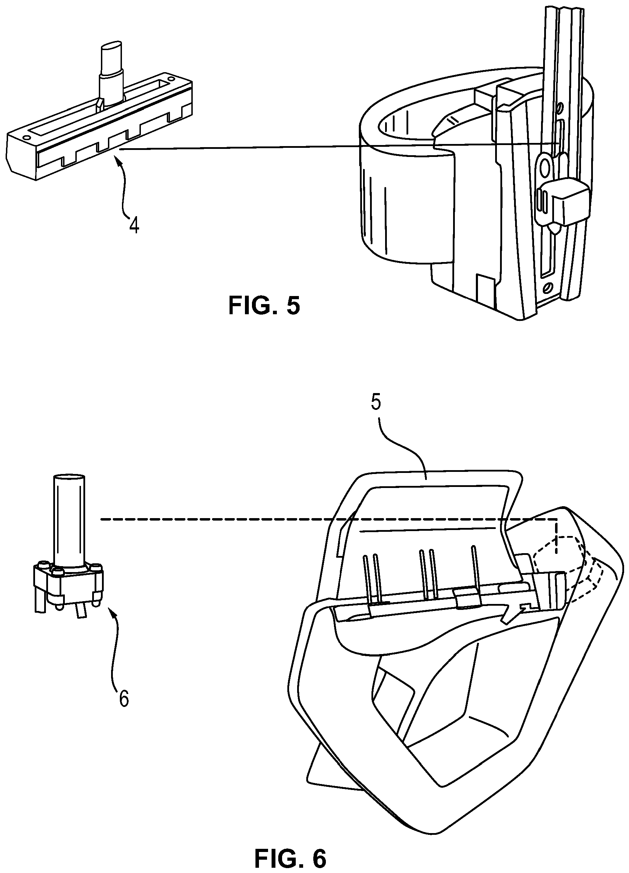

Figur 5 zeigt ein Schiebepotentiometer 4, das den Bewegungsweg der Hand aufnehmen bzw. erfassen kann.

Figur 6 zeigt eine Bedieneinheit, an deren Oberteil ist eine Wippe 5 angebracht ist, die mit den Fingern betätigt wird. Ein Drehpotentiometer 6 nimmt den Bewegungsweg der Finger auf und kann daraus Signale zum Ansteuern von Aktuatoren der Baumaschine erzeugen.

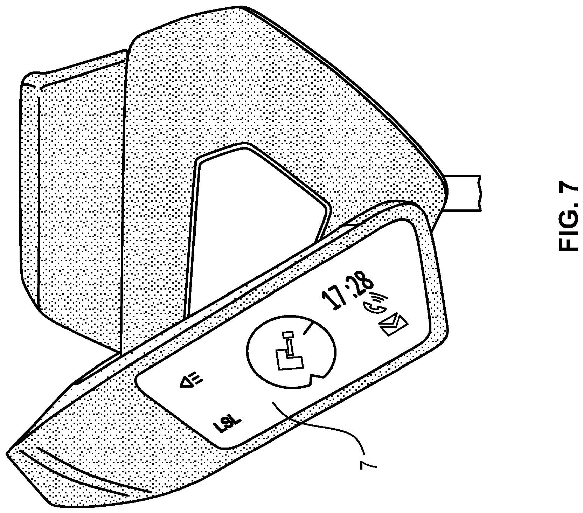

Figur 7 zeigt eine Bedieneinheit, an deren Oberteil ein Multifunktionsdisplay 7 mit Touchscreen angebracht ist. Auf diesem Display können beispielsweise die kritischen Betriebszustände des Gerätes, Warnungen, der aktuelle Standort und/oder eingehende Aufträge angezeigt werden.

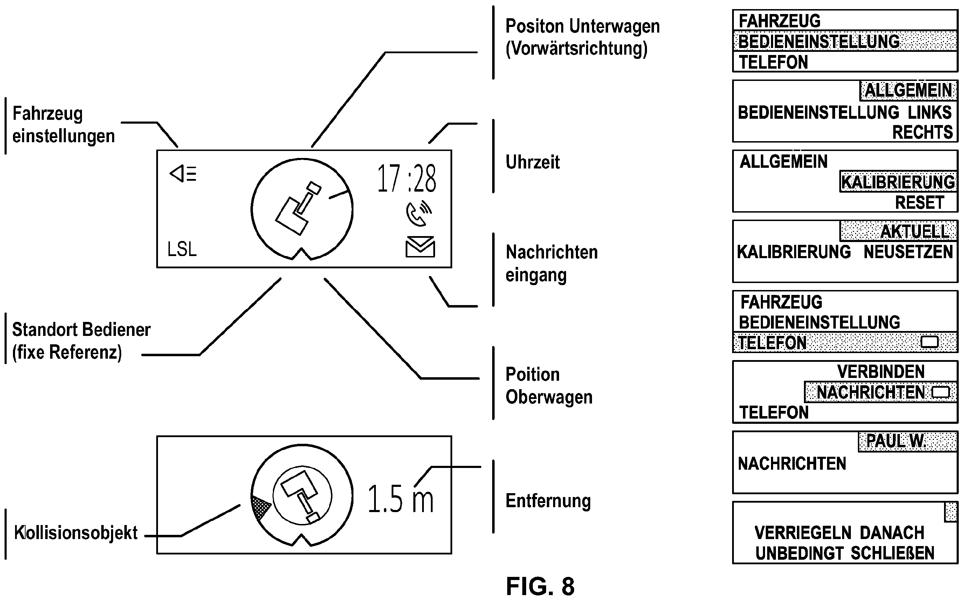

Ein Teil der Bedienung der Baumaschine kann über ein Touchscreen erfolgen. Das Interface kann eine festgelegte Menüstruktur aufweisen, über die unterschiedliche Informationen abgerufen und Funktionen bedient werden können. Figur 8 zeigt eine beispielhafte Ausgestaltung des Touchscreens.

Die Bedieneinheit kann über eine kabellose Schnittstelle mit dem Steuergerät der Arbeitsmaschine verbunden sein. Daten können über eine kabellose Schnittstelle an die Arbeitsmaschine übertragen werden.

Ein Schiebegelenk an einer Hand kann in einer Variante alternativ als Wippe ausgeführt werden. In dieser Variante kann über das zusätzliche Gelenk eine weitere Stelleinrichtung gesteuert werden. Denkbar ist die Zuordnung eines Handgelenks zu einem Ausleger oder Schwenkarm, eines Fingers bzw. Knöchelgelenks zu einem Verstellausleger oder Stiel und/oder eines Fingergelenks zu einem Stiel der Baumaschine.

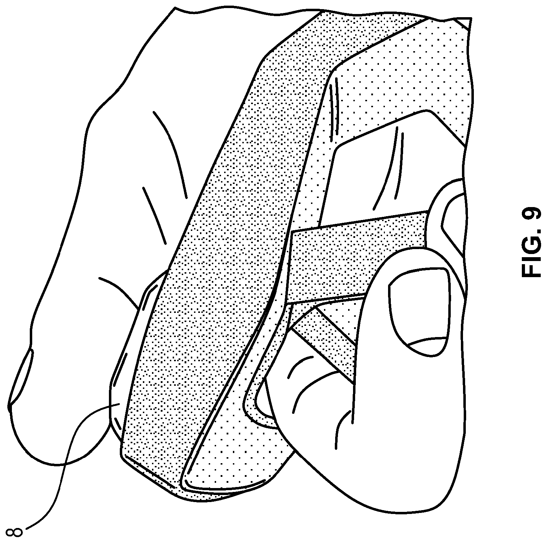

Figur 9 zeigt, dass das Schwenken eines Oberwagens der Baumaschine über eine Daumenbewegung gesteuert sein kann, die beispielsweise über einen Schalter 8 oben auf der rechten Bedieneinheit erfassbar ist.

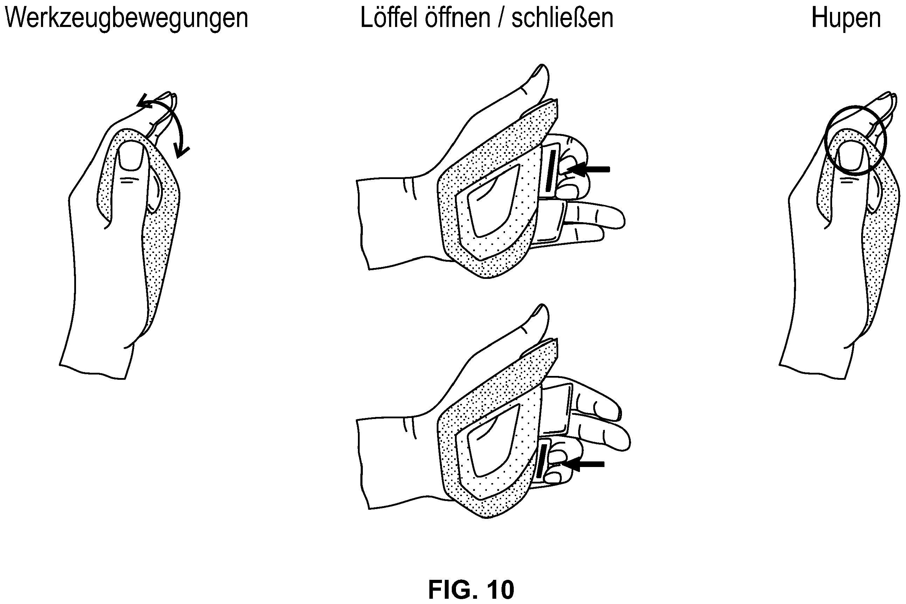

Figur 10 zeigt beispielhaft mit einer Hand ausführbare Funktionen. Hierbei ist zwar die linke Hand gezeigt, die gezeigten Funktionen könnten jedoch genauso mit der rechten Hand ausgeführt werden.

Im linken Bereich der Figur 10 ist gezeigt, dass durch Anwinkeln beispielsweise des Handgelenks die Bewegungen bzw. Rotationen des Arbeitswerkzeuges/Grabwerkzeuges einer Baumaschine gesteuert werden können.

Die Werkzeugbewegung wie das Ein- bzw. Auskippen eines Löffels kann gemäß dem mittleren Bereich der Figur 10 wie die Stielbewegung über Wippen gesteuert werden, wobei hier zwei Wippen vorgesehen sein können. Eine Wippe kann durch den Zeige- und den Mittelfinger und die andere durch den Ringfinger und den kleinen Finger betätigt werden. Mit dem Daumen kann gemäß dem rechten Bereich der Figur 10 beispielsweise die Hupe betätigt werden.

Die Stellung des Handgelenks kann zum Ansteuern der Rotation eines Anbauwerkzeugs, die Stellung eines Knöchelgelenks kann zum An-/Auskippen eines Werkzeugs, die Stellung eines Fingergelenks kann zum Öffnen/Schließen eines Anbauwerkzeugs und/oder die die Stellung des Daumens kann zum Rotieren eines Anbauwerkzeugs und/oder zum Ausgeben eines Warnsignals bzw. zum Betätigen einer Hupe herangezogen werden. Selbstverständlich kann gegebenenfalls auch mehr als eines der genannten Gelenke bzw. Körperteile zur Steuerung entsprechender Funktionen berücksichtigt werden.

Die Erfindung ermöglicht die Verbesserung der Wirtschaftlichkeit entsprechender Baumaschinen bereits bei deren Anschaffung sowie bei deren Betrieb. Die Erfindung ermöglicht es ferner, dass auch nachträglich hinzugefügte Arbeitsbewegungen bzw. Funktionen der Arbeitsmaschine und der eingesetzten Arbeitswerkzeuge gesteuert werden können. Durch eine entsprechende Software kann eine inverse Steuerung der beteiligten Aktoren der Baumaschine ermöglicht werden. Die Software kann dabei beispielsweise auf einer Steuerung/Regelung der Baumaschine implementiert sein. Ferner können durch eine entsprechende Schnittstelle Parameter zur Skalierung der Arbeitsbewegungen übertragen werden. Die Skalierung der Bedieneinrichtung kann durch eine Software unterschiedlichen Arbeitsausrüstungen der Baumaschine angepasst werden.

Die Bedieneinrichtung kann dazu ausgebildet sein, auf die individuellen Körperma-βe einer Bedienperson angepasst zu werden. Hierzu können beispielsweise verstellbare Schnallen an der Bedieneinheit vorgesehen sein. Einzelne Komponenten, insbesondere die Bedieneinheit oder die Bedieneinheiten der Bedieneinrichtung können spiegelbildlich ausgeführt werden, so dass sie sowohl linkshändisch als auch rechtshändisch bedienbar sind.

## Patentansprüche

1. Arbeitsmaschine mit einer Bedieneinrichtung, die über eine Schnittstelle mit einem Steuergerät der Arbeitsmaschine gekoppelt ist, wobei die Arbeitsmaschine einen Oberwagen und einen Ausleger mit wenigstens zwei Abschnitten umfasst, und wobei die Bedieneinrichtung dazu ausgebildet ist, Steuersignale zum Ansteuern der Arbeitsmaschine in Abhängigkeit einer Gelenkstellung einer Hand einer Bedienperson zu erzeugen, umfassend wenigstens eine Bedieneinheit,
**dadurch gekennzeichnet,**
**dass** die Bedieneinheit dazu eingerichtet ist, die Stellung des Handgelenks und die Stellung wenigstens eines Fingergrundgelenks der Hand zu erfassen und auf der Grundlage der erfassten Stellungen ein Steuersignal zum Ansteuern wenigstens zweier Aktuatoren der Arbeitsmaschine zu erzeugen, wobei ein erster Aktuator eingerichtet ist, einen ersten Abschnitt des Auslegers in Abhängigkeit von der Stellung des Handgelenks relativ zum Oberwagen zu verschwenken, und wobei ein zweiter Aktuator eingerichtet ist, einen zweiten Abschnitt des Auslegers in Abhängigkeit von der Stellung des wenigstens einen Fingergrundgelenks relativ zum ersten Abschnitt des Auslegers zu verschwenken.

2. Arbeitsmaschine nach Anspruch 1, **dadurch gekennzeichnet, dass** die Bedieneinheit ferner dazu eingerichtet ist, die Stellung wenigstens eines Fingermittelgelenks oder Fingerendgelenks der Hand zu erfassen, dass der Ausleger einen dritten Abschnitt und einen weiteren Aktuator umfasst, und dass der weitere Aktuator dazu eingerichtet ist, den dritten Abschnitts des Auslegers relativ zum zweiten Abschnitt des Auslegers in Abhängigkeit von der Stellung des wenigstens eines Fingermittel- oder Fingerendgelenks zu verschwenken.

3. Arbeitsmaschine nach einem der vorhergehenden Ansprüche, **dadurch gekennzeichnet, dass** die Bedieneinheit ferner dazu eingerichtet ist, die Stellung zweier Fingermittelgelenke oder Fingerendgelenke der Hand zu erfassen, dass der Ausleger ferner wenigstens ein Arbeitswerkzeug und einen weiteren Aktor umfasst, und dass der weitere Aktuator dazu eingerichtet ist, das Arbeitswerkzeug in Abhängigkeit von der Stellung der Fingermittel- oder Fingerendgelenke zu verstellen.

4. Arbeitsmaschine nach Anspruch 3, **dadurch gekennzeichnet, dass** es sich bei dem Arbeitswerkzeug um ein Grabwerkzeug handelt.

5. Arbeitsmaschine nach einem der vorhergehenden Ansprüche, **dadurch gekennzeichnet, dass** es sich bei der Schnittstelle um eine kabellose Schnittstelle handelt.

6. Arbeitsmaschine nach einem der vorhergehenden Ansprüche, **dadurch gekennzeichnet, dass** es sich bei der Arbeitsmaschine um einen Hydraulikbagger handelt.

## Claims

1. A working machine comprising an operating device that is coupled to a controller of the working machine via an interface, wherein the working machine comprises an uppercarriage and a boom having at least two portions, and wherein the operating device is configured to generate control signals for actuating the working machine in dependence on a joint position of a hand of an operator, comprising at least one operating unit,
**characterized in**
**that** the operating unit is equipped to detect the position of the wrist and the position of at least one metacarpophalangeal joint of the hand and on the basis of the detected positions generate a control signal for actuating at least two actuators of the working machine, wherein a first actuator is equipped to pivot a first portion of the boom relative to the uppercarriage in dependence on the position of the wrist, and wherein a second actuator is equipped to pivot a second portion of the boom relative to the first portion of the boom in dependence on the position of the at least one metacarpophalangeal joint.

2. The working machine according to claim 1, **characterized in that** the operating unit furthermore is equipped to detect the position of at least one proximal interphalangeal joint or distal interphalangeal joint of the hand, that the boom comprises a third portion and a further actuator, and that the further actuator is equipped to pivot the third portion of the boom relative to the second portion of the boom in dependence on the position of the at least one proximal or distal interphalangeal joint.

3. The working machine according to any of the preceding claims, **characterized in that** the operating unit furthermore is equipped to detect the position of two proximal interphalangeal joints or distal interphalangeal joints of the hand, that the boom furthermore comprises at least one working tool and a further actuator, and that the further actuator is equipped to adjust the working tool in dependence on the position of the proximal or distal interphalangeal joints.

4. The working machine according to claim 3, **characterized in that** the working tool is a digging tool.

5. The working machine according to any of the preceding claims, **characterized in that** the interface is a wireless interface.

6. The working machine according to any of the preceding claims, **characterized in that** the working machine is a hydraulic excavator.

## Revendications

1. Machine de travail avec un dispositif de commande qui est couplé par une interface à un appareil de commande de la machine de travail, la machine de travail comprenant un châssis tournant et une flèche avec au moins deux sections, et le dispositif de commande étant conçu pour générer des signaux de commande pour actionner la machine de travail en dépendance d'une position d'articulation d'une main d'un opérateur, comprenant au moins une unité de commande,
**caractérisée en ce que**
l'unité de commande est conçue pour détecter la position du poignet et la position d'au moins une articulation métacarpo-phalangienne de la main et pour générer, sur la base des positions détectées, un signal de commande pour actionner au moins deux actionneurs de la machine de travail, un premier actionneur étant conçu pour faire pivoter une première section de la flèche en dépendance de la position du poignet par rapport au châssis tournant, et un deuxième actionneur étant conçu pour faire pivoter une deuxième section de la flèche en dépendance de la position d'au moins une articulation métacarpo-phalangienne par rapport à la première section de la flèche.

2. Machine de travail selon la revendication 1, **caractérisée en ce que** l'unité de commande est en outre conçue pour détecter la position d'au moins une articulation interphalangienne proximale ou articulation interphalangienne distale de la main, **en ce que** la flèche comprend une troisième section et un autre actionneur, et **en ce que** l'autre actionneur est conçu pour faire pivoter la troisième section de la flèche par rapport à la deuxième section de la flèche en dépendance de la position de l'au moins une articulation interphalangienne proximale ou articulation interphalangienne distale.

3. Machine de travail selon l'une quelconque des revendications précédentes, **caractérisée en ce que** l'unité de commande est en outre conçue pour détecter la position de deux articulations interphalangiennes proximales ou articulations interphalangiennes distales de la main, **en ce que** la flèche comprend en outre au moins un outil de travail et un autre actionneur, et **en ce que** l'autre actionneur est conçu pour déplacer l'outil de travail en dépendance de la position des articulations interphalangiennes proximales ou distales.

4. Machine de travail selon la revendication 3, **caractérisée en ce que** l'outil de travail est un outil de creusement.

5. Machine de travail selon l'une quelconque des revendications précédentes, **caractérisée en ce que** l'interface est une interface sans fil.

6. Machine de travail selon l'une quelconque des revendications précédentes, **caractérisée en ce que** la machine de travail est une pelle hydraulique.
